# EUROPEAN PATENT APPLICATION

(11) **EP 3 893 451 A1**
(43) Date of publication of application: **13.10.2021**
(21) Application number: 19893260.0
(22) Date of filing: 01.02.2019
(51) Int. Cl.: H04L 12/935

(54) **NETWORK ISOLATION METHOD AND APPARATUS BASED ON USER MODE PROTOCOL STACK**

(30) Priority: 07.12.2018 CN 201811497871
(71) Applicant: Wangsu Science & Technology Co., Ltd., Shanghai 200030 (CN)
(72) Inventor: CHENG, Duyong, Shanghai 200030 (CN)
(74) Representative: De Arpe Tejero, Manuel
(86) International application number: PCT/CN2019/074459
(87) International publication number: WO 2020/113817

(57) **Abstract**

The present disclosure provides a user-mode protocol stack-based network isolation method and a device thereof, and relates to the field of network communication. The method includes: at a bottom-layer network card interface of a user-mode protocol stack, for each network card, adding an isolation space pointer for binding to a network isolation space; when a service application is initialized, configuring a plurality of user-mode protocol stack network isolation spaces with independent protocol stack private tables based on the user-mode protocol stack; for each network card, designating a corresponding user-mode protocol stack network isolation space through the isolation space pointer of each network card; and for service data received from each network card, performing data processing on the service data through protocol stack private tables in a user-mode protocol stack network isolation space corresponding to the network card. According to the present disclosure, network isolation may be implemented through user-mode protocol stack-based service applications.

## Description

### FIELD OF DISCLOSURE

The present disclosure generally relates to the field of network communication technology and, more particularly, relates to a user-mode protocol stack-based network isolation method and a device thereof.

### BACKGROUND

Network isolation technology inside a network device is a technology that receives service data through different network cards on the network device and stores the service data in different network isolation spaces for processing. Due to the complete separation between network isolation spaces, service applications between each network isolation space do not interfere with each other, thereby achieving stable concurrency of service applications and ensuring data security during service processing.

Linux system provides a method of kernel-level environment isolation based on the namespace mechanism, in which the network namespace may be configured to implement the above-described network isolation process inside the network device. Logically, each network namespace may be considered as a copy of the network protocol stack, which provides an independent network environment, just like an independent system that has its own routing table, adjacency list, Netfilter table, network socket, and other network resources.

Applicant has found that the existing technologies have at least the following problems:
In recent years, more and more service applications rely on the user-mode protocol stack to operate. However, the user-mode protocol stack is deployed in user space. Therefore, the existing kernel-based network isolation technologies cannot be applied directly to service applications in the user-mode protocol stack.

### SUMMARY

To solve the foregoing problems in the existing technologies, embodiments of the present disclosure provide a user-mode protocol stack-based network isolation method and a device thereof. The technical solutions are as follows.

In one aspect, a user-mode protocol stack-based network isolation method is provided. The method includes:
at a bottom-layer network card interface of a user-mode protocol stack, for each network card, adding an isolation space pointer for binding to a network isolation space;
when a service application is initialized, configuring a plurality of user-mode protocol stack network isolation spaces with independent protocol stack private tables based on the user-mode protocol stack;
for each network card, designating a corresponding user-mode protocol stack network isolation space through the isolation space pointer of each network card; and
for service data received from each network card, performing data processing on the service data through protocol stack private tables in a user-mode protocol stack network isolation space corresponding to the network card.

Optionally, for service data received from each network card, performing data processing on the service data through the protocol stack private tables in the user-mode protocol stack network isolation space corresponding to the network card includes:
when the service data is received from a target network card, determining a target user-mode protocol stack network isolation space according to an isolation space pointer of the target network card;
calling protocol stack private tables of the target user-mode protocol stack network isolation space, and performing protocol stack processing on the service data based on the user-mode protocol stack; and
providing service data obtained after the protocol stack processing to the service application, and performing service processing on the service data based on the service application.

Optionally, performing service processing on the service data based on the service application includes:
determining a service processing logic of a service application configuration file corresponding to the target user-mode protocol stack network isolation space, and performing, based on the service application, service processing on the service data according to the service processing logic.

Optionally, the method further includes:
loading an isolation space management tool with a space identifier added for the target user-mode protocol stack network isolation space; and
through the isolation space management tool, managing the service application configuration file corresponding to the target user-mode protocol stack network isolation space through a shared memory.

Optionally, the method further includes:
for a socket structure of the user-mode protocol stack, adding an isolation space pointer for binding to a network isolation space;
when the service application creates a target socket, designating the corresponding target user-mode protocol stack network isolation space through the isolation space pointer of the socket structure of the target socket; and
for the service data generated when the target socket is called, performing a data processing on the service data through the protocol stack private tables in the target user-mode protocol stack network isolation space.

Optionally, the method further includes:
loading an isolation space management tool with an added target space identifier; and
through the isolation space management tool, managing the protocol stack private tables in the user-mode protocol stack network isolation space corresponding to the target space identifier through the shared memory.

In another aspect, a user-mode protocol stack-based network isolation device is provided. The device includes:
a modification module that is configured to, at a bottom-layer network card interface of a user-mode protocol stack, for each network card, add an isolation space pointer for binding to a network isolation space;
a configuration module that is configured to, when a service application is initialized, configure a plurality of user-mode protocol stack network isolation spaces with independent protocol stack private tables based on the user-mode protocol stack;
a binding module that is configured to, for each network card, designate a corresponding user-mode protocol stack network isolation space through the isolation space pointer of each network card; and
a processing module that is configured to, for service data received from each network card, perform data processing on the service data through protocol stack private tables in a user-mode protocol stack network isolation space corresponding to the network card.

Optionally, the processing module is specifically configured to:
when service data is received from a target network card, determine a target user-mode protocol stack network isolation space according to an isolation space pointer of the target network card;
call protocol stack private tables of the target user-mode protocol stack network isolation space, and perform protocol stack processing on the service data based on the user-mode protocol stack; and
provide the service data obtained after the protocol stack processing to the service application, and perform service processing on the service data based on the service application.

Optionally, the processing module is specifically configured to:
determine a service processing logic of the service application configuration file corresponding to the target user-mode protocol stack network isolation space, and perform, based on the service application, service processing on the service data according to the service processing logic.

Optionally, the device further includes:
a loading module that is configured to load an isolation space management tool with a space identifier added for the target user-mode protocol stack network isolation space; and
a management module that is configured to, through the isolation space management tool, manage the service application configuration file corresponding to the target user-mode protocol stack network isolation space through a shared memory.

Optionally, the modification module is further configured to, for a socket structure of the user-mode protocol stack, add an isolation space pointer for binding to a network isolation space;
the binding module is further configured to, when the service application creates a target socket, designate a corresponding target user-mode protocol stack network isolation space through the isolation space pointer of the socket structure of the target socket; and
the processing module is further configured to, for service data generated when the target socket is called, perform data processing on the service data through the protocol stack private tables in the target user-mode protocol stack network isolation space.

Optionally, the device further includes:
a loading module that is configured to load an isolation space management tool with an added target space identifier; and
a management module that is configured to, through the isolation space management tool, manage protocol stack private tables in a user-mode protocol stack network isolation space corresponding to the target space identifier through a shared memory.

In another aspect, a network device is provided. The network device includes a processor and a memory. The memory stores at least one instruction, at least one application, a code set or an instruction set. The at least one instruction, the at least one application, and the code set or the instruction set is loaded and executed by the processor to implement the foregoing user-mode protocol stack-based network isolation methods.

In another aspect, a computer-readable storage medium is provided. The storage medium stores at least one instruction, at least one application, a code set or an instruction set. The at least one instruction, the at least one program, and the code set or the instruction set is loaded and executed by the processor to implement the foregoing user-mode protocol stack-based network isolation methods.

The beneficial effects brought by the technical solutions provided by the embodiments of the present disclosure are as follows.

In the embodiments of the present disclosure, at the bottom-layer network card interface of the user-mode protocol stack, an isolation space pointer for binding to a network isolation space is added for each network card. When a service application is initialized, based on the user-mode protocol stack, a plurality of user-mode protocol stack network isolation spaces with independent protocol stack private tables are configured. Through the isolation space pointer of each network card, a corresponding user-mode protocol stack network isolation space is designated for each network card. For service data received from each network card, data processing is performed on the service data through the protocol stack private tables in the user-mode protocol stack network isolation space corresponding to the network card. In this way, through an isolation space pointer, the association between the network cards and the user-mode protocol stack network isolation spaces is established. Accordingly, for service data received by different network cards, different user-mode protocol stack network isolation spaces are used to designate independent protocol stack private tables for data processing, and there is no interference with each other, thereby achieving the user-mode protocol stack-based network isolation.

### BRIEF DESCRIPTION OF THE DRAWINGS

To make the technical solutions in the embodiments of the present disclosure clearer, a brief introduction of the accompanying drawings consistent with the description of the disclosed embodiments will be provided hereinafter. It is to be understood that the following described drawings are merely some embodiments of the present disclosure. Based on the accompanying drawings and without creative efforts, persons of ordinary skill in the art may derive other drawings.
FIG. 1 is a flow chart of a user-mode protocol stack-based network isolation method according to some embodiments of the present disclosure;
FIG. 2 is a schematic structure diagram of a user-mode protocol stack-based network isolation device according to some embodiments of the present disclosure; and
FIG. 3 is a schematic structure diagram of a network device according to some embodiments of the present disclosure.

### DETAILED DESCRIPTION

To make the objective, technical solutions, and advantages of the present disclosure clearer, embodiments of the present disclosure will be made in detail hereinafter with reference to the accompanying drawings.

Embodiments of the present disclosure provide a user-mode protocol stack-based network isolation method. The execution entity of the method may be any network device capable of running a service application. Specifically, the execution entity may be a backend server of a service provider. Here, the network device may be configured to include a user-mode protocol stack to replace a kernel-mode protocol stack to process service data to be received and transmitted. The network device may run user-mode protocol stack-based service applications, such as nginx, haproxy, HTTP server, etc. These service applications run in user space. The high performance and high concurrency requirements of these service applications may be satisfied through the user-mode protocol stack and the corresponding network isolation technology. The network device may include a processor, a memory, and a transceiver. The processor may be configured to process user-mode protocol stack-based network isolation in the following process. The memory may be configured to store data required and generated in the following process, and the transceiver may be configured to receive and transmit data related to the following process.

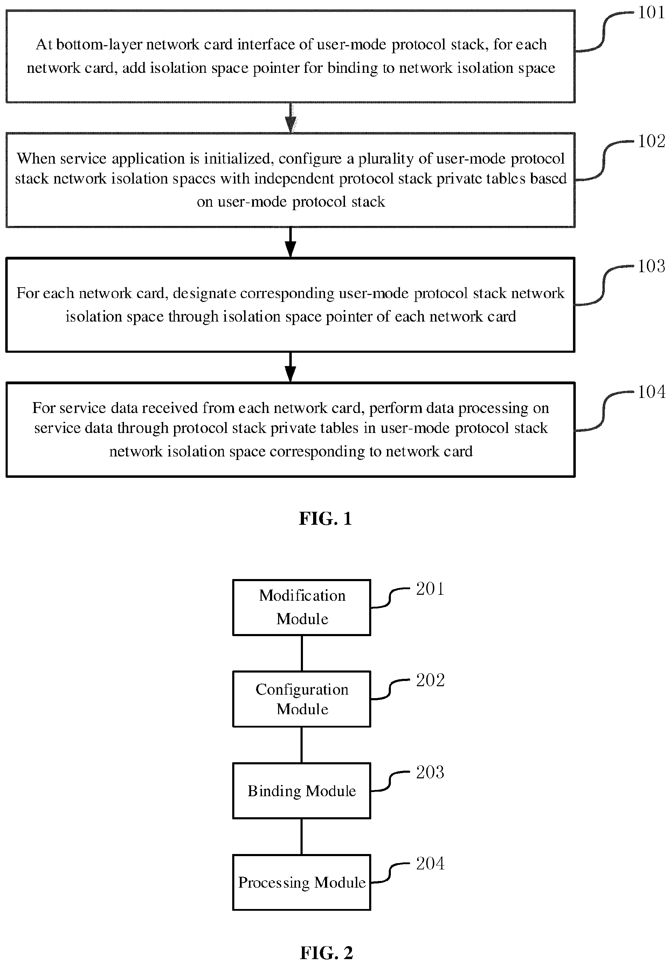

The flow chart illustrated in FIG. 1 will be made in detail hereinafter with reference to specific embodiments, the content of which may be as follows.

Step 101: At the bottom-layer network card interface of the user-mode protocol stack, for each network card, add an isolation space pointer for binding to a network isolation space.

In one implementation, in order to implement the network isolation technology on the user-mode protocol stack so that the service data received by different network cards reaches different network isolation spaces, the user-mode protocol stack needs to be modified first. Specifically, the bottom-layer network card interface of the user-mode protocol stack may be first determined. Next, at the bottom-layer network card interface, an isolation space pointer for binding to a network isolation space may be added for each network card. The isolation space pointer may be configured to bind each network card to a specific network isolation space. The processing in this step may be implemented by controlling the network device by a network technical staff on the network device side, or automatically implemented by the network device based on a preset user-mode protocol stack modification application.

Step 102: When a service application is initialized, configure a plurality of user-mode protocol stack network isolation spaces with independent protocol stack private tables based on the user-mode protocol stack.

In one implementation, when a service application installed on a network device is started for the first time or restarted after a failure, an initialization process may be performed. At this moment, the network device may load a protocol stack configuration file of the service application, call the user-mode protocol stack, and create a specified number of user-mode protocol stack network isolation spaces (configured by the protocol stack configuration file). All these user-mode protocol stack network isolation spaces have their independent protocol stack private tables. That is, the protocol stack private tables in each user-mode protocol stack network isolation space may be the same, partially the same, or completely different from the protocol stack private tables in other user-mode protocol stack network isolation spaces. Each user-mode protocol stack network isolation space has a private isolation space address. The protocol stack private tables may include an IP address table, a routing table, a socket table, a conntrack table, and other network parameter tables that need to be called when the user-mode protocol stack performs a data processing on the service data.

Step 103: For each network card, designate a corresponding user-mode protocol stack network isolation space through the isolation space pointer of each network card.

In one implementation, when a service application is initialized, after the network device has configured a plurality of user-mode protocol stack network isolation spaces, based on the protocol stack configuration file of the service application, a corresponding user-mode protocol stack network isolation space may be similarly designated for each network card through the isolation space pointer of each network card. That is, the isolation space pointer of each network card is configured to point to a user-mode protocol stack network isolation space. Here, each network card is bound to only one user-mode protocol stack network isolation space, while each user-mode protocol stack network isolation space may be bound to a plurality of network cards. The specific correspondence between the network cards and the user-mode protocol stack network isolation spaces is configured in the protocol stack configuration file.

Step 104: For service data received from each network card, perform data processing on the service data through the protocol stack private tables in a user-mode protocol stack network isolation space corresponding to the network card.

In one implementation, when a service application is running, the network device may receive the service data of the service application from a network card. For the received service data, the network device may first determine the network card that receives the service data. Next, the user-mode protocol stack network isolation space corresponding to the network card may be determined. Afterwards, through the protocol stack private tables in the determined user-mode protocol stack network isolation space, the user-mode protocol stack and the service application may be applied to perform data processing on the service data.

Optionally, protocol stack processing may be first performed on the service data through the user-mode protocol stack. Next, the service data may be forwarded to the service application to perform service processing. Accordingly, the processing of Step 104 may be as follows:
when the service data is received from a target network card, determine the target user-mode protocol stack network isolation space according to the isolation space pointer of the target network card;
call the protocol stack private tables in the target user-mode protocol stack network isolation space, and perform protocol stack processing on the service data based on the user-mode protocol stack; and
provide the service data obtained after the protocol stack processing to the service application, and perform service processing on the service data based on the service application.

In one implementation, taking a target network card as an example, after the network device designates a user-mode protocol stack network isolation space for each network card, during the operation of the service application, when the network device receives service data from a target network card, the target user-mode protocol stack network isolation space may be determined based on the isolation space pointer of the target network card. Afterwards, in the process of using the user-mode protocol stack to perform the protocol stack processing on the service data, when the specific network parameter tables are needed, the network device may call the protocol stack private tables in the target user-mode protocol stack network isolation space, then use these protocol stack private tables to continue the protocol stack processing on the service data. Next, after the protocol stack processing is completed, the network device may provide the service data, obtained after the protocol stack processing, to the service application, then perform service processing on the service data through the service application. It is to be understood that the protocol stack processing of a plurality of user-mode protocol stack network isolation spaces may all be divided into public protocol stack processing and private protocol stack processing in each user-mode protocol stack network isolation space. All protocol stack processing may be implemented by the same user-mode protocol stack, regardless of the public protocol stack processing or private protocol stack processing. Here, the private protocol stack processing is specifically implemented by calling protocol stack private tables in different network isolation spaces. The network device does not need to create a plurality of user-mode protocol stack instances, thereby reducing the consumption of system resources and reducing the management complexity of the user-mode protocol stack.

Optionally, the service processing corresponding to different user-mode protocol stack network isolation spaces may also be different. Correspondingly, the service processing of the service data may be specifically as follows: determine a service processing logic of the service application configuration file corresponding to the target user-mode protocol stack network isolation space, and perform, based on the service application, the service processing on the service data according to the service processing logic.

In one implementation, also taking the service data received by the target network card as an example, after the network device provides the service data, obtained after the protocol stack processing, to the service application, a service processing logic of the service application configuration file corresponding to the target user-mode protocol stack network isolation space may be determined. Next, the service processing logic may be executed by the service application, thereby achieving the service processing of the service data. It should be noted that, before running the service application, the service application also needs to be modified in order for the service application to use the network isolation technology. Specifically, a plurality of service application configuration files may be created, each of which may correspond to a user-mode protocol stack network isolation space. The service processing, application attribute configuration, and application startup parameters in different service application configuration files are all separate from each other and do not interfere with each other. When a service application is initialized, it may load all the service application configuration files and store the service processing logic of each service application configuration file. In this way, when the service processing corresponding to different user-mode protocol stack network isolation spaces needs to be performed, the same service application may be implemented according to different service processing logic. The network device does not need to start an independent service application for each user-mode protocol stack network isolation space, thereby saving the consumption of the system resources and reducing the management complexity of the service application.

Optionally, after performing certain modification on the isolation space management tool, the service application configuration files may be managed through the isolation space management tool, and the corresponding processing may be as follows: load the isolation space management tool with a space identifier added for the target user-mode protocol stack network isolation space; through the isolation space management tool, manage the service application configuration file corresponding to the target user-mode protocol stack network isolation space through the shared memory.

In one implementation, existing isolation space management tools applicable to the Linux kernel-level network isolation technology may be modified. That is, a parameter, i.e., a space identifier, for a user-mode protocol stack network isolation space may be added to the isolation space management tool. In this way, taking the target user-mode protocol stack network isolation space as an example, the network device may load the isolation space management tool with a space identifier added for the target user-mode protocol stack network isolation space. Next, through the isolation space management tool, communication between the isolation space management tool and the service application may be implemented through the shared memory, so that the management of the service application configuration file corresponding to the target user-mode protocol stack network isolation space may be implemented.

Optionally, a socket structure may be modified to implement the network isolation technology based on the user-mode protocol stack. The corresponding processing may be as follows: for the socket structure of the user-mode protocol stack, add an isolation space pointer for binding to a network isolation space; when the service application creates a target socket, designate the corresponding target user-mode protocol stack network isolation space through the isolation space pointer of the socket structure of the target socket; for the service data generated when the target socket is called, perform a data processing on the service data through the protocol stack private tables of the target user-mode protocol stack network isolation space.

In one implementation, the socket structure of the user-mode protocol stack may be modified in advance. That is, an isolation space pointer for binding to a network isolation space may be added to the socket structure, where the isolation space pointer may be configured to bind a socket function operation to a specific network isolation space. Thereafter, when the service application creates a target socket, based on the service application configuration file, an isolation space pointer may be added for a user-mode protocol stack network isolation space (e.g., the target user-mode protocol stack network isolation space). In this way, through the isolation space pointer of the socket structure of the target socket, a corresponding target user-mode protocol stack network isolation space may be designated for the target socket. Further, for the service data generated when the target socket is called, the network device may perform data processing on the service data through the protocol stack private tables in the target user-mode protocol stack network isolation space. Specifically, after the service application generates the service data, if the service data needs to be transmitted in the form of a packet, the service data may be forwarded to the user-mode protocol stack for protocol stack processing through calling the created target socket. During the processing, the network device may determine the corresponding target user-mode protocol stack network isolation space according to the target socket, then call the protocol stack private tables of the target user-mode protocol stack network isolation space to implement the associated protocol stack processing. Subsequently, the service data may be encapsulated into a packet, which is then transmitted through the network card corresponding to the target user-mode protocol stack network isolation space, so that network isolation may be implemented in service data transmission.

Optionally, after performing certain modification on the isolation space management tool, the protocol stack private tables in a user-mode protocol stack network isolation space may be managed through the isolation space management tool. The corresponding processing may be as follows: load the isolation space management tool with an added target space identifier; through the isolation space management tool, manage the protocol stack private tables in the user-mode protocol stack network isolation space corresponding to the target space identifier through the shared memory.

In one implementation, existing isolation space management tools (e.g., ifconfig, ip, and other tools) applicable to the Linux kernel-level network isolation technology may be modified. That is, a parameter, i.e., a space identifier, for a user-mode protocol stack network isolation space may be added to the isolation space management tool. In this way, the network device may load the isolation space management tool with the added target space identifier. Next, through that isolation space management tool, communication between the isolation space management tool and the user-mode protocol stack network isolation space corresponding to the target space identifier may be implemented through the shared memory, so that the management of the protocol stack private tables of the user-mode protocol stack network isolation space may be implemented.

In the embodiments of the present disclosure, at the bottom-layer network card interface of the user-mode protocol stack, an isolation space pointer for binding to a network isolation space is added for each network card. When a service application is initialized, based on the user-mode protocol stack, a plurality of user-mode protocol stack network isolation spaces with independent protocol stack private tables are configured. Through the isolation space pointer of each network card, a corresponding user-mode protocol stack network isolation space is designated for each network card. For service data received from each network card, data processing is performed on the service data through the protocol stack private tables in the user-mode protocol stack network isolation space corresponding to the network card. In this way, through an isolation space pointer, the association between the network cards and the user-mode protocol stack network isolation spaces is established. Accordingly, for service data received by different network cards, different user-mode protocol stack network isolation spaces are used to designate independent protocol stack private tables for data processing, and there is no interference with each other, thereby achieving the user-mode protocol stack-based network isolation.

Based on the similar technical concepts, embodiments of the present disclosure further provide a user-mode protocol stack-based network isolation device. As shown in FIG. 2, the device includes:
a modification module 201 that is configured to, at a bottom-layer network card interface of a user-mode protocol stack, for each network card, add an isolation space pointer for binding to a network isolation space;
a configuration module 202 that is configured to, when a service application is initialized, configure a plurality of user-mode protocol stack network isolation spaces with independent protocol stack private tables based on the user-mode protocol stack;
a binding module 203 that is configured to, for each network card, designate a corresponding user-mode protocol stack network isolation space through the isolation space pointer of each network card; and
a processing module 204 that is configured to, for service data received from each network card, perform data processing on the service data through the protocol stack private tables in a user-mode protocol stack network isolation space corresponding to the network card.

Optionally, the processing module 204 is specifically configured to:
when service data is received from a target network card, determine a target user-mode protocol stack network isolation space according to an isolation space pointer of the target network card;
call protocol stack private tables of the target user-mode protocol stack network isolation space, and perform protocol stack processing on the service data based on the user-mode protocol stack; and
provide service data obtained after the protocol stack processing to the service application, and perform service processing on the service data based on the service application.

Optionally, the processing module 204 is specifically configured to:
determine a service processing logic of a service application configuration file corresponding to the target user-mode protocol stack network isolation space, and perform, based on the service application, service processing on the service data according to the service processing logic.

Optionally, the device further includes:
a loading module that is configured to load an isolation space management tool with a space identifier added for the target user-mode protocol stack network isolation space; and
a management module that is configured to, through the isolation space management tool, manage the service application configuration file corresponding to the target user-mode protocol stack network isolation space through a shared memory.

Optionally, the modification module 201 is further configured to, for a socket structure of the user-mode protocol stack, add an isolation space pointer for binding to a network isolation space;
the binding module 203 is further configured to, when the service application creates a target socket, designate a corresponding target user-mode protocol stack network isolation space through an isolation space pointer of the socket structure of the target socket; and
the processing module 204 is further configured to, for service data generated when the target socket is called, perform data processing on the service data through the protocol stack private tables in the target user-mode protocol stack network isolation space.

Optionally, the device further includes:
a loading module that is configured to load an isolation space management tool with an added target space identifier; and
a management module that is configured to, through the isolation space management tool, manage protocol stack private tables in a user-mode protocol stack network isolation space corresponding to the target space identifier through a shared memory.

In the embodiments of the present disclosure, at the bottom-layer network card interface of the user-mode protocol stack, an isolation space pointer for binding to a network isolation space is added for each network card. When a service application is initialized, based on the user-mode protocol stack, a plurality of user-mode protocol stack network isolation spaces with independent protocol stack private tables are configured. Through the isolation space pointer of each network card, a corresponding user-mode protocol stack network isolation space is designated for each network card. For service data received from each network card, data processing is performed on the service data through the protocol stack private tables in the user-mode protocol stack network isolation space corresponding to the network card. In this way, through an isolation space pointer, the association between the network cards and the user-mode protocol stack network isolation spaces is established. Accordingly, for service data received by different network cards, different user-mode protocol stack network isolation spaces are used to designate independent protocol stack private tables for data processing, and there is no interference with each other, thereby achieving the user-mode protocol stack-based network isolation.

It should be noted that, when the user-mode protocol stack-based network isolation device provided by the foregoing embodiments implements the user-mode protocol stack-based network isolation, the division of the functional modules described above is provided merely for exemplary purposes. In practical applications, the functions described above may be allocated to different functional modules according to the needs. That is, the internal structure of the device may be divided into different functional modules to complete all or part of the functions described above. In addition, the user-mode protocol stack-based network isolation device and the user-mode protocol stack-based network isolation method provided by the foregoing embodiments belong to the similar concept, and the specific implementation process for device embodiments may refer to the method embodiments, details of which will not be further described again here.

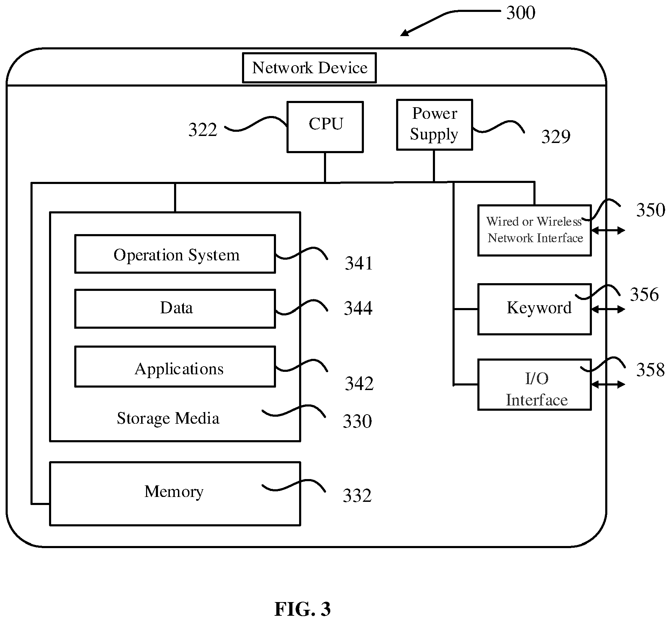

FIG. 3 is a schematic structure diagram of a network device according to some embodiments of the present disclosure. The network device 300 may exhibit a quite obvious difference due to different configurations or performance, and may include one or more central processing units 322 (e.g., one or more processors), a memory 332, and one or more storage media 330 (e.g., one or more mass storage devices) for storing application programs 342 or data 344. The memory 332 and the storage media 330 may be volatile storage or non-volatile storage. The applications stored in the storage media 330 may include one or more modules (not shown in the figure), each of which may include a series of instruction operations for the network device 300. Further, the central processing unit(s) 322 may be configured to communicate with the storage media 330 and execute, on the network device 300, a series of instruction operations stored in the storage media 330.

The network device 300 may further include one or more power supplies 329, one or more wired or wireless network interfaces 350, one or more input/output interfaces 358, one or more keyboards 356, and/or one or more operating systems 341, such as Windows Server®, Mac OS X®, Unix®, Linux®, FreeBSD®, etc.

The network device 300 may include a memory, and one or more applications. The one or more applications may be stored in the memory, and configured to be executed by one or more processors. The one or more applications may include instructions for performing user-mode protocol stack-based network isolation described above.

Those with ordinary skills in the art may understand that all or part of the steps of implementing the embodiments described above may be completed by hardware or may be completed by applications instructing related hardware. The applications may be stored in a computer-readable storage medium. The storage medium may be a read-only memory, a magnetic disk, or an optical disk, etc.

The foregoing embodiments are merely some embodiments of the present disclosure and are not intended to limit the present disclosure. Any modification, equivalent replacement, or improvement made within the spirit and principle of the present disclosure shall fall within the protection scope of the present disclosure.

## Claims

1. A user-mode protocol stack-based network isolation method, comprising:
at a bottom-layer network card interface of a user-mode protocol stack, for each network card, adding an isolation space pointer for binding to a network isolation space;
when a service application is initialized, configuring a plurality of user-mode protocol stack network isolation spaces with independent protocol stack private tables based on the user-mode protocol stack;
for each network card, designating a corresponding user-mode protocol stack network isolation space through an isolation space pointer of each network card; and
for service data received from each network card, performing data processing on the service data through protocol stack private tables in a user-mode protocol stack network isolation space corresponding to the network card.

2. The method according to claim 1, wherein, for service data received from each network card, performing data processing on the service data through the protocol stack private tables in the user-mode protocol stack network isolation space corresponding to the network card further includes:
when the service data is received from a target network card, determining a target user-mode protocol stack network isolation space according to an isolation space pointer of the target network card;
calling protocol stack private tables of the target user-mode protocol stack network isolation space, and performing protocol stack processing on the service data based on the user-mode protocol stack; and
providing service data obtained after the protocol stack processing to the service application, and performing service processing on the service data based on the service application.

3. The method according to claim 2, wherein performing service processing on the service data based on the service application further includes:
determining a service processing logic of a service application configuration file corresponding to the target user-mode protocol stack network isolation space, and performing, based on the service application, service processing on the service data according to the service processing logic.

4. The method according to claim 3, further comprising:
loading an isolation space management tool with a space identifier added for the target user-mode protocol stack network isolation space; and
through the isolation space management tool, managing the service application configuration file corresponding to the target user-mode protocol stack network isolation space through a shared memory.

5. The method according to claim 1, further comprising:
for a socket structure of the user-mode protocol stack, adding an isolation space pointer for binding to a network isolation space;
when the service application creates a target socket, designating a corresponding target user-mode protocol stack network isolation space through an isolation space pointer of a socket structure of the target socket; and
for service data generated when the target socket is called, performing data processing on the service data through protocol stack private tables in the target user-mode protocol stack network isolation space.

6. The method according to claim 1, further comprising:
loading an isolation space management tool with an added target space identifier; and
through the isolation space management tool, managing protocol stack private tables in a user-mode protocol stack network isolation space corresponding to the target space identifier through a shared memory.

7. A user-mode protocol stack-based network isolation device, comprising:
a modification module that is configured to, at a bottom-layer network card interface of a user-mode protocol stack, for each network card, add an isolation space pointer for binding to a network isolation space;
a configuration module that is configured to, when a service application is initialized, configure a plurality of user-mode protocol stack network isolation spaces with independent protocol stack private tables based on the user-mode protocol stack;
a binding module that is configured to, for each network card, designate a corresponding user-mode protocol stack network isolation space through an isolation space pointer of each network card; and
a processing module that is configured to, for service data received from each network card, perform data processing on the service data through protocol stack private tables in a user-mode protocol stack network isolation space corresponding to the network card.

8. The device according to claim 7, wherein the processing module is further configured to:
when service data is received from a target network card, determine a target user-mode protocol stack network isolation space according to an isolation space pointer of the target network card;
call protocol stack private tables of the target user-mode protocol stack network isolation space, and perform protocol stack processing on the service data based on the user-mode protocol stack; and
provide service data obtained after the protocol stack processing to the service application, and perform service processing on the service data based on the service application.

9. The device according to claim 8, wherein the processing module is further configured to:
determine a service processing logic of a service application configuration file corresponding to the target user-mode protocol stack network isolation space, and perform, based on the service application, service processing on the service data according to the service processing logic.

10. The device according to claim 9, further comprising:
a loading module that is configured to load an isolation space management tool with a space identifier added for the target user-mode protocol stack network isolation space; and
a management module that is configured to, through the isolation space management tool, manage the service application configuration file corresponding to the target user-mode protocol stack network isolation space through a shared memory.

11. The device according to claim 7, wherein:
the modification module is further configured to, for a socket structure of the user-mode protocol stack, add an isolation space pointer for binding to a network isolation space;
the binding module is further configured to, when the service application creates a target socket, designate a corresponding target user-mode protocol stack network isolation space through an isolation space pointer of a socket structure of the target socket; and
the processing module is further configured to, for service data generated when the target socket is called, perform data processing on the service data through protocol stack private tables in the target user-mode protocol stack network isolation space.

12. The device according to claim 7, further comprising:
a loading module that is configured to load an isolation space management tool with an added target space identifier; and
a management module that is configured to, through the isolation space management tool, manage protocol stack private tables in a user-mode protocol stack network isolation space corresponding to the target space identifier through a shared memory.

13. A network device, comprising: a processor and a memory, wherein the memory stores at least one instruction, at least one program, a code set or an instruction set, wherein the at least one instruction, the at least one program, the code set or the instruction set is loaded and executed by the processor to implement the user-mode protocol stack-based network isolation method according to any one of claims 1 to 6.

14. A computer-readable storage medium, storing at least one instruction, at least one program, a code set or an instruction set, wherein the at least one instruction, the at least one program, the code set or the instruction set is loaded and executed by a processor to implement the user-mode protocol stack-based network isolation method according to any one of claims 1 to 6.
